# EUROPEAN PATENT APPLICATION

(11) **EP 3 597 610 A1**
(43) Date of publication of application: **22.01.2020**
(21) Application number: 19186938.7
(22) Date of filing: 18.07.2019
(51) Int. Cl.: C02F 11/145, C05F 7/00, C05G 3/04, C05D 3/02, C05D 9/00

(54) **METHOD FOR TREATING SEWAGE SLUDGE**

(30) Priority: 20.07.2018 GB 201811905
(71) Applicant: Anglo Scottish Biosolids Ltd, Falkirk, Stirlingshire FK1 3AL (GB)
(72) Inventor: McCAIG, James, Falkirk, FK1 3AL (GB)
(74) Representative: Bradley, Josephine Mary

(57) **Abstract**

The invention relates to a process for treating sewage sludge comprising mixing (i) CaO or Ca(OH)₂, and (ii) cement with the sewage sludge. Sewage sludge treated by the process of the invention can be stored in the form of a structurally stable stockpile prior to its use, for example, prior to its application to land as a fertiliser.

## Description

### FIELD OF THE INVENTION

The invention relates to a process for treating sewage sludge comprising mixing (i) CaO or Ca(OH)₂, and (ii) cement with the sewage sludge. Sewage sludge treated by the process of the invention can be stored in the form of a structurally stable stockpile prior to its use, for example, prior to its application to land as a fertiliser.

### BACKGROUND OF THE INVENTION

Effective management and disposal of sewage sludge produced during sewage treatment is important as it can impact on water pollution, air pollution (smell) and quality of life. This applies, in particular, to the storage of sewage sludge prior to its application to land as fertiliser.

Sewage sludge or sewage cake is typically about 25 wt % dry solids and 75 wt % water and is the result of dewatering sewage by, for example, centrifuging. Typically, at the time of centrifuging, sewage sludge is contaminated by pathogens such as *Salmonella* and *Escherichia coli* and contains the residue of polymer used in the separation process. It is normal practice to treat sewage sludge with either quick lime to kill such pathogens through heat or to increase the pH to achieve a like effect. The problem with recycling sewage cake treated thus, for example, to agriculture is that because of the lack of mechanical strength of the sewage cake, it is difficult to stack in a heap and the resultant stockpiles deteriorate over time. Stockpiles of sewage sludge have a strong tendency to collapse and the sewage material can run considerable distances. This can cause pollution of water courses and raises environmental concerns. Further, the stockpiles can have an obnoxious smell, are unpopular with neighbours. These are serious problems and, as a result, the storage of sewage sludge is typically regulated by legislation. For example, the storage and application of fertiliser is a regulated activity in Scotland and special authorisation is required if the activity does not comply with the General Binding Rules of The Water Environment (Controlled Activities) (Scotland) Regulations 2011 (version 8.2, February 2018). In particular, General Binding Rule 18 (GBR 18) relates to the storage and application of fertiliser and specifies that:
j) dewatered digestate or dewatered sewage sludge must be stored:
   i. in such a way that it is securely contained so that any escape or run-off is prevented; or
   ii. in a heap that is protected from the ingress of water;
k) if dewatered digestate or dewatered sewage sludge is stored in a heap in a field, it must be applied to land within 6 months of the commencement of the storage.

It has been suggested that compliance with this regulation can be achieved by building a temporary structure around the heap of sewage sludge so as to contain it. However, this is not a very practical solution. However, the building of such a temporary structure consumes time and materials and any resultant containment of the gases produced by the sewage sludge has safety implications.

It is desirable to be able to store sewage sludge in a manner that meets the requirements of GBR18. It is desirable to be able to store sewage sludge in a structurally stable stockpile, for example, outside in a field. It is also desirable to be able to recycle the sewage sludge as a fertiliser or soil improver for land.

It is an object of the present invention to meet one or more of the above-mentioned desires and/or to address or alleviate one or more of the above-mentioned problems.

### SUMMARY OF THE INVENTION

In a first aspect, the invention provides a process for treating sewage sludge comprising mixing (i) CaO or Ca(OH)₂, and (ii) cement with the sewage sludge. It has been found that the method of the invention results in the formation of a mass by the coalescence of the sewage cake, lime, and cement. The term "lime" as used herein refers to CaO or Ca(OH)₂. The mass becomes a semi-solid mass with substantial mechanical strength and a reduced smell. It is stable when heaped in a stockpile and does not degrade or run when subjected to heavy rain or the melting of snow covering the stockpile. The process of the invention produces a treated sewage sludge and the process can further include a step of forming a stockpile from the treated sewage sludge.

In a second aspect, the invention provides for treated sewage sludge obtained or obtainable by the process of the first aspect of the invention. The treated sewage sludge may be in the form of a stockpile. The treated sewage sludge of the invention is suitable for application to land as a fertiliser or application to soil as a soil improver.

Thus, in a third aspect, there is provided a method of fertilising land comprising spreading treated sewage sludge according to the second aspect of the invention on the land. There is also provided a method of improving soil comprising spreading treated sewage sludge according to the second aspect of the invention on the soil.

In a fourth aspect, the invention provides the use of cement to stabilise and/or reduce odours from sewage sludge that has been treated with CaO or Ca(OH)₂.

### BRIEF DESCRIPTION OF THE FIGURES

Figure 1 is photograph of a stockpile of treated sewage sludge of Sample 1. This photo was taken 2 weeks after the stockpile was formed.
Figure 2 is another view of the stockpile of treated sewage sludge of Sample 1 shown in Figure 1. This photo was taken 2 weeks after the stockpile was formed.
Figure 3 is photograph of a stockpile of treated sewage sludge of Sample 2. This photo was taken 2 weeks after the stockpile was formed.

### DETAILED DESCRIPTION OF THE INVENTION

In a first aspect, the invention provides a process for treating sewage sludge comprising mixing (i) CaO or Ca(OH)₂, and (ii) cement with the sewage sludge.

Sewage sludge refers to material that is produced as a by-product of treatment of wastewater to remove impurities before the wastewater reaches, for example, aquifiers or natural bodies of water such as rivers, lakes, estuaries and oceans. The wastewater can be domestic sewage, industrial sewage or storm sewage, for example. Domestic sewage comprises used water from houses; industrial sewage comprises used water from manufacturing or chemical processes; and storm sewage or storm water is run off from precipitation that is collected, for example, in a system of pipes or open channels. Most sewage sludge is produced from a mix of domestic and industrial sewage, with industrial sewage normally being a minor component, if not a very minor component.

Sewage sludge is obtained by dewatering wastewater. Typically dewatering involves using either a centrifuge or belt press to separate the solids, i.e. sewage sludge, from a liquid fraction. Polymer is added immediately prior to dewatering to enhance separation and thicken the solids. The polymer residue is generally not removed from the solids. Sewage sludge is also referred to herein as sewage cake. Typically the sewage sludge which is subject to the process of the invention contains from about 10 to 30 wt % or about 15 to 30 wt % dry solids. The sewage sludge can contain from about 15 to 26 wt % or 16 to 25 wt % dry solids. The sewage sludge can contain about 25 wt % dry solids. By wt % dry solids is meant the wt % of the dry solids contained in the wet sewage sludge based on the weight of the wet sewage sludge. The amount of sewage sludge in wt % dry solids is measured according to the British Standard BS EN 13040:2007.

Depending on the extent to which it is treated to destroy pathogens present in it, generally sewage sludge falls into one of the following three categories: untreated sewage sludge; conventionally treated sewage sludge; and enhanced treated sewage sludge. Untreated sewage sludge is raw sewage sludge which has not been treated, e.g. by a biological, chemical or heat treatment, to destroy pathogens (e.g. bacteria) present. Conventional sewage sludge has been treated to destroy most of the pathogens present in the original sewage sludge. Typically, the amount of pathogens present in the original sewage sludge is reduced by 99 %. Typically, conventional sewage sludge will be free of *Salmonella* and contain less than 100 000 c.f.u. (colony forming units) of *E. coli* per g of dry weight of the sewage sludge. The most common form of conventional treatment is anaerobic digestion, where sludge is digested at a temperature of 35 degrees Celsius for a minimum of 12 days, followed by a further period of maturation. Enhanced treated sewage sludge is sewage sludge that has been treated by, what are referred to in the art as, enhanced treatment processes. Enhanced treatment processes are capable of virtually eliminating any pathogens that may be present in the original sludge. For example, sewage sludge that has been subjected to an enhanced treatment process will be free of *Salmonella spp* and, typically, will have had 99.9999 % of all pathogens present destroyed (i.e. a 6 log₁₀ reduction). Typically, sewage sludge that has been subjected to an enhanced treatment process will be free of *Salmonella* and contain less than 1000 c.f.u. E. *coli* per g of dry weight. Enhanced treatment processes are much more energy intensive treatment processes than conventional treatment processes and include, e.g. drying the sludge to 98% dry solids, lime pasteurisation or digestion followed by heat treatment. The category of treatment determines the end-use of the sewage sludge, i.e. whether it is allowed, for example, according to legislation, to be used as a fertiliser for land. The category of treatment can vary depending on the intended use of the land to be fertilised, e.g. the crop group (e.g. fruit, salads, vegetables, horticulture, animal feed crops, grassland and/or forage) that is to be grown and whether or not the land is to be grazed. To ensure the maximum potential end use of the sewage sludge, it should be subjected to an enhanced treatment process.

The process of the invention includes mixing (i) CaO or Ca(OH)₂; and (ii) cement with sewage sludge.

CaO and Ca(OH)₂ are typically used to destroy pathogens in sewage sludge and can be used in the enhanced treatment of sewage sludge, i.e. to achieve an absence of *Salmonella* and an initial 6 log₁₀ (i.e. 99.9999 %) reduction of *E**.** coli* in the sewage sludge. Although CaO and Ca(OH)₂ act to destroy pathogens in the sewage sludge of the present invention, it is believed that, advantageously, they also act to accelerate the setting of the cement in the sewage cake.

CaO is also known as quick lime or burnt lime. Ca(OH)₂ can be used as a solid and Ca(OH)₂ in this form is also known as hydrated lime. Ca(OH)₂ can be used in a suspension in water and Ca(OH)₂ in this form is also known as liquid lime.

The amount of CaO or Ca(OH)₂ used in the process of the invention can be the amount required to achieve an absence of *Salmonella* and an initial 99 % reduction in *E.coli.* The amount of CaO or Ca(OH)₂ used in the process of the invention can be the amount required to achieve an absence of *Salmonella* and less than 100 000 c.f.u. *E. coli* per g of dry solids in the sewage sludge. The weight of dry solids in the sewage sludge, i.e. the dry weight of the sewage sludge, is measured as set out for dry matter in British Standard BS EN 13040:2007, i.e. the weight of dry solids in the sewage sludge is m_{D}-m_{T}, where m_{D} is the mass of the dry matter plus the tray (i.e. the weight of the dry solids plus the tray) and m_{T} is the mass of the empty tray as referred to in BS EN 13040:2007. The amount of CaO or Ca(OH)₂ used in the process of the invention can be the amount required to constitute enhanced treatment of the sewage sludge, i.e. the amount required to achieve an absence of *Salmonella* and an initial 6 log₁₀ reduction (i.e. 99.9999 %) of *E. coli* in the sewage sludge. The amount of CaO or Ca(OH)₂ used in the process of the invention can be the amount required to achieve an absence of *Salmonella* and less than 1000 c.f.u. of *E. coli* per g of dry weight. The amount of CaO or Ca(OH)₂ used in the process of the invention can be the amount required to achieve an absence of *Salmonella* and less than 1000 parts per million of E. *coli* per g of dry weight.

In the process of the invention CaO or Ca(OH)₂ is added to and mixed with the sewage sludge until the desired reduction in pathogens or the desired level of pathogens is achieved. It will be understood that the amount of CaO and Ca(OH)₂ and the mixing time required to achieve the desired reduction in/level of pathogens may vary between batches of sewage sludge. The amount of CaO and Ca(OH)₂ and the mixing time required to achieve the desired reduction in pathogens or the desired level of pathogens can readily be determined by a person skilled in the art by, for example, testing for the presence of relevant pathogens at intervals during the mixing process.

When CaO is used in the process of the invention, the process can involve mixing CaO with the sewage sludge in an amount sufficient to generate enough heat to reduce the relevant pathogens in the sewage sludge to the desired level and/or to adjust the pH of the sewage sludge to have the same effect. The process can involve mixing CaO with the sewage sludge in an amount sufficient to adjust the pH of the sewage sludge so that it has a pH of at least 11 or at least 11.2 after about one hour, i.e. so that the sewage sludge has a pH of at least 11 or at least 11.2 one hour after adding the CaO. Preferably the amount of CaO is added so as to adjust the pH of the sewage sludge so that it has a pH of from 11 or 11.2 to 12, or a pH of from 11.2 to less than 12, at about one hour after adding the CaO. It has been found that keeping the pH value of the sewage sludge to 12 or below at this point, i.e. at about one hour after adding the CaO, avoids excessive production of ammonia from the sewage sludge, advantageously. Typically, the amount of CaO required to achieve enhanced treatment of sewage sludge is from 40 to 60 or 70 kg per 1000 kg (tonne) of sewage sludge.

Alternatively, the process of the invention can involve mixing Ca(OH)₂ with the sewage sludge in an amount sufficient to adjust the pH of the sewage sludge so that it has a pH of at least 11 or 11.2 after about one hour, i.e. so that the sewage sludge has a pH of at least 11 or at least 11.2 one hour after adding the Ca(OH)₂, in order to reduce the relevant pathogens in the sewage sludge to the required level. Preferably the amount of Ca(OH)₂ is added so as to adjust the pH of the sewage sludge so that it has a value of from 11 or 11.2 to 12, or a value of from 11 or 11.2 to less than 12, at about one hour after adding the Ca(OH)₂. It has been found that keeping the pH value of the sewage sludge to 12 or below at this point, i.e. at about one hour after adding the Ca(OH)₂, avoids excessive production of ammonia from the sewage sludge, advantageously. In one embodiment, the process of the invention involves the use of liquid lime. The presence of the water in the liquid lime facilitates a thorough mixing of the Ca(OH)₂ with the sewage sludge. The process of the present invention can involve the use of liquid lime in an amount of from 28 to 40 kg per 1000 kg (tonne) of sewage sludge, where the liquid lime comprises Ca(OH)₂ is present in a concentration of 45 wt % in water, based on the total weight of the liquid lime.

The CaO or Ca(OH)₂ and the cement can be mixed with the sewage sludge sequentially. For example, the sewage sludge can be treated with CaO or Ca(OH)₂ first, after which cement is mixed into the sewage sludge so-treated. The sewage sludge so-treated with CaO or Ca(OH)₂ may be an enhanced treated sewage sludge as described above and it may be pre-prepared. Alternatively, the cement can be mixed into the sewage sludge first, after which CaO or Ca(OH)₂ is mixed into the sewage sludge so-treated with the cement.

The CaO or Ca(OH)₂ and the cement can be mixed with the sewage sludge at the same time, i.e. the process of the invention can be carried out as a one pot process. When CaO is used, a one pot process has the advantage of ensuring that any heat generated due to the reaction of CaO with the sewage sludge can help in setting the cement.

The mixing should be carried out so that the components (CaO or Ca(OH)₂/cement and sewage sludge) are blended together thoroughly. This can be achieved through mechanical mixing.

It has been found that the addition of the cement to the sewage sludge not only results in increasing the mechanical strength of the sewage sludge, it also reduces the smell of the sewage sludge. Thus, the resultant sewage sludge composition is able to be stored as a stable, relatively inoffensive smelling stockpile in a field, for example. It is also believed that the CaO or Ca(OH)₂ accelerates the setting of the cement in the sewage cake.

The cement is a mixture of dry ingredients. Typically the cement is hydraulic cement, i.e. it sets and becomes adhesive due to a chemical reaction between the dry ingredients of the cement, and water.

Preferably the cement comprises more than 25 wt %, more than 50 wt % or more than 66 wt % of a calcium silicate or a mixture of calcium silicates. The calcium silicate can be tricalcium silicate ((CaO)₃.SiO₂), or dicalcium silicate ((CaO)₂.SiO₂). Thus the cement can comprise more than 25 wt %, more than 50 wt % or more than 66 wt % of tricalcium silicate ((CaO)₃.SiO₂), dicalcium silicate ((CaO)₂.SiO₂) or a mixture thereof.

The cement can comprise: tricalcium silicate; dicalcium silicate; optionally, tricalcium aluminate ((CaO)₃.Al₂O₃); optionally, tetracalcium aluminoferrite ((CaO)₄.Al₂O₃.Fe₂O₃); and, optionally, gypsum (CaSO₄.2H₂O). Preferably gypsum is not present.

The cement can comprise:
45-75 wt % tricalcium silicate;
7-32 wt % dicalcium silicate;
0-13 wt % tricalcium aluminate;
0-18 wt % tetracalcium aluminoferrite; and
0-10 wt % or 2-10 wt % gypsum.

The cement can comprise:
50 - 60 wt % tricalcium silicate;
17-26 wt % dicalcium silicate;
4-12 wt % tricalcium aluminate;
5-13 wt % tetracalcium aluminoferrite; and
0-10 wt % or 2-10 wt % gypsum.

The cement can comprise:
50 - 58 wt % tricalcium silicate;
18-25 wt % dicalcium silicate;
5-11 wt % tricalcium aluminate;
6-12 wt % tetracalcium aluminoferrite; and
0-10 wt % or 2-10 wt % gypsum.

The cement can comprise:
55 wt % tricalcium silicate;
19 wt % dicalcium silicate;
10 wt % tricalcium aluminate;
7 wt % tetracalcium aluminoferrite; and
0-10 wt % or 2-10 wt % gypsum.

The cement can comprise:
51 wt % tricalcium silicate;
24 wt % dicalcium silicate;
16 wt % tricalcium aluminate;
11 wt % tetracalcium aluminoferrite; and
0-10 wt % or 2-10 wt % gypsum.

The cement can comprise:
57 wt % tricalcium silicate;
19 wt % dicalcium silicate;
10 wt % tricalcium aluminate;
7 wt % tetracalcium aluminoferrite; and
0-10 wt % or 2-10 wt % gypsum.

Preferably the cement is a Portland cement. Portland cements are as defined in ASTM C150/C150M-18. The cement can be a Type I, Type II or Type III Portland cement as defined in ASTM C150/C150M-18, for example.

The amount of cement used in the process of the invention is the amount required to ensure that a stockpile of the sewage sludge will remain physically stable for an extended period of time (e.g. up to 6 months), will not degrade or run when subjected to heavy rain in that period and will be usable in conventional muck spreader. A conventional muck (or manure) spreader is a trailer that is towed behind a tractor and contains a rotating mechanism that distributes or sprays the "muck" contained in the trailer onto the land. The rotating mechanism is typically powered by the tractor's power take off. To be usable in a conventional muck spreader, the sewage sludge needs to be of a consistency that is able to move through and be broken down readily by the rotating mechanism of the muck spreader. Typically the amount of cement used in the process of the invention renders the sewage sludge friable, i.e. easily crumbled and thus usable in a conventional muck spreader.

The amount of cement used in the process of the invention is typically from 7 to 15 wt % based on the dry solids content of the sewage sludge. The cement can be mixed with the sewage sludge or a mixture of sewage sludge and Ca or Ca(OH)₂ in an amount of from 7 to 15 wt % or of from 8 to 13 wt % or of from 10 to 12.5 wt %, based on the dry solids content of the sewage sludge.

The process of the invention produces a treated sewage sludge, i.e. a sewage sludge treated with CaO or Ca(OH)₂ and cement as described above. The process of the invention can include a further step of arranging the treated sewage sludge in a stockpile. The stockpile can weigh between 200 000 kg and 600 000 kg, for example. The properties of such a stockpile are discussed throughout this specification.

In the second aspect of the invention, there is provided treated sewage sludge obtained or obtainable by the process of the first aspect of the invention. The process of the first aspect of the invention is a process for producing treated sewage sludge. The treated sewage sludge is sewage sludge that has been treated with CaO or Ca(OH)₂ and cement as described above and can be in the form of a stockpile. The treated sewage sludge can be used as fertilizer or soil improver.

Thus, in the third aspect of the invention, there is provided a process of fertilising land comprising spreading treated sewage sludge, i.e. sewage sludge that has been treated with CaO or Ca(OH)₂ and cement as described above, on the land. There is also provided a process of improving soil comprising spreading treated sewage sludge, i.e sewage sludge that has been treated with CaO or Ca(OH)₂ and cement as described above, on the soil.

In the fourth aspect of the invention, there is provided the use of cement to stabilise and/or reduce odours from sewage sludge that has been treated with CaO or Ca(OH)₂. By stabilise is meant physically stabilise. In this aspect of the invention, the cement is as described and is used in the amounts described for previous aspects of the invention. Further, the sewage sludge that has been treated with CaO or Ca(OH)₂ is as described for previous aspects of the invention. Preferably the sewage sludge has been subjected to enhanced treatment using CaO or Ca(OH)₂, i.e. so that an absence of *Salmonella* and an initial 6 log₁₀ reduction (i.e. 99.9999 %) of E. *coli* in the sewage sludge is achieved, or an absence of *Salmonella* in the sewage cake and an amount of *E.coli* in the sewage cake is less than10³ per gram of dry solids is achieved.

As used herein, the term "comprising" is intended also to encompass as alternative embodiments "consisting essentially of" and "consisting of." "Consisting essentially of" permits the inclusion of substances that do not materially affect the basic and novel characteristics of the composition under consideration.

The advantageous properties of the process and composition of the invention are discussed below in relation to the following non-limiting examples.

### Experiment 1

Two stockpiles of sewage cake were deposited on level ground in different fields of the same farm in Perthshire, Scotland and monitored over a period of 2 months. One stockpile contains a traditional lime treated sewage cake and is Sample 1. The other stockpile contains a traditional lime treated cake with cement added at a rate of 20 kg per 1000 kg (tonne) of sewage cake and is Sample 2.

The sewage cake used to prepare the treated sewage cake of each of Sample 1 and Sample 2 was from the same source and had a dry solids content of 16 - 20 wt %. The treated sewage cake of Sample 1 was prepared by weighing 5 000 kg (5 tonnes) of sewage cake (having a dry solids content of 16 - 20 wt %) into an enclosed mixer, adding 300 kg of quick lime and mixing the composition for 1 minute. The treated sewage cake of Sample 2 was prepared by weighing 5 000 kg (5 tonnes) of sewage cake (having a dry solids content of 16 - 20 wt %) into an enclosed mixer, adding 300 kg of quick lime, 100 kg of Portland cement and mixing the composition for 1 minute. 400 000 kg (400 tonnes) of each of the treated sewage cake of Sample 1 and Sample 2 deposited on level ground in a separate field the same farm in Perthshire, Scotland.

After one day, the composition of the treated sewage cake of each of stockpiles Sample 1 and Sample 1 was analysed and the results are shown in Table 1 below.

**Table 1**

| | Sample 1 | Sample 2 |
|---|---|---|
| Dry solids wt % | 25.82 | 25.01 |
| pH | 10.62 | 10.83 |
| Salmonella (absent/present) | Absent | Absent |
| E.coli cfu g | 350 | 100 |
| Cadmium mg/kg | 0.44 | 0.58 |
| Chromium mg/kg | 53.8 | 59.7 |
| Copper mg/kg | 72.4 | 61.3 |
| Lead mg/kg | 38.5 | 40.6 |
| Mercury mg/kg | 0.15 | 0.18 |
| Nickel mg/kg | 22.3 | 16.9 |
| Zinc mg/kg | 95.3 | 82.1 |
| Total N % dry wt | 3.06 | 3.2 |
| Total P mg/kg | 5,300 | 7200 |
| Total K mg/kg | 1,300 | 1,500 |
| Ammonia-N | 3,500 | 3,200 |
| Total Cr VI mg/kg | <0.1 | <0.1 |
| Available Cr VI mg/l | <0.1 | <0.1 |

The results confirm that the sewage has been subjected to enhanced treatment, i.e. that there is no *Salmonella* present and less than 1000 parts per million *E. coli* present. The presence/absence of *Salmonella* can be determined using the presence/absence technique published by the UK Government in blue book 195 of the Standing Committee of Analysts (SCA), entitled "The Microbilogy of Sewage Sludge (2004) - Part 4 - Methods for the detection, isolation and enumeration of Salmonellae". The amount of *E. coli* present can be determined using the chromogenic membrane filtration technique described in section A or D, or the most probable number technique described in section B or C, of blue book 190 of the Standing Committee of Analysts (SCA), published by the UK Government and entitled "The Microbiology of Sewage Sludge (2003) - Part 3 - Methods for the isolation and enumeration of Escherichia coli, including verocytotoxigenic Escherichia coli".

The stockpiles were inspected on a weekly basis and, after 2 weeks, the stockpile of Sample 1 was observed to continue to deteriorate from the previous weekly inspection.

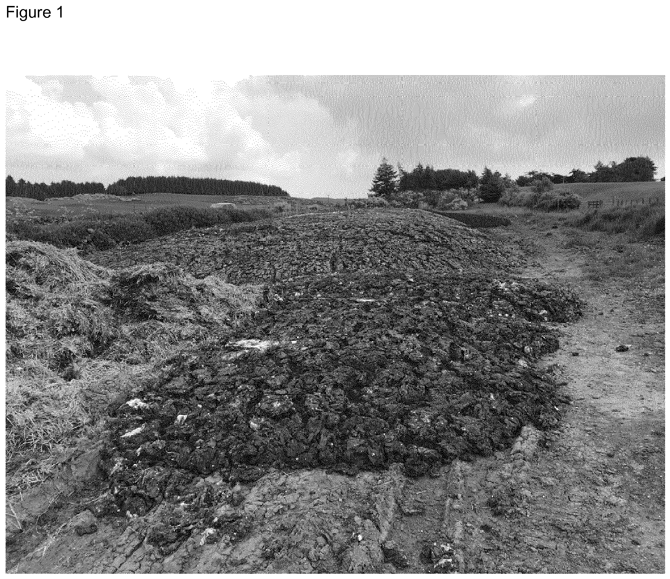

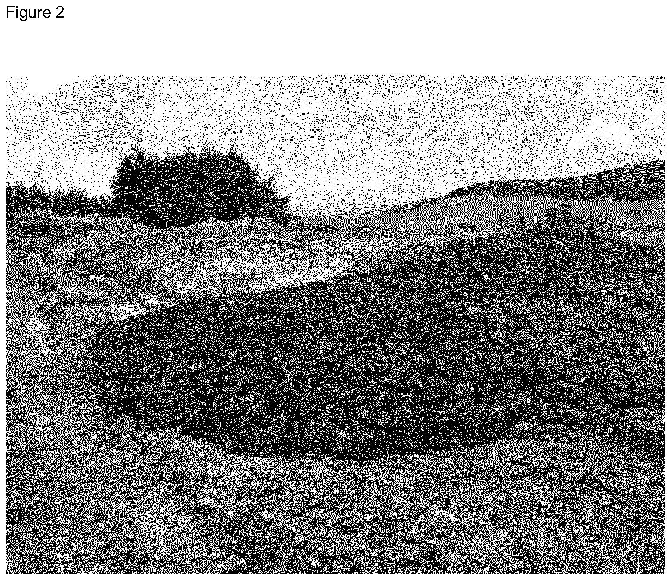

The stockpile was observed as becoming noticeably less stable and starting to break down and a noticeable malodour was observed around the stockpile. Further, it was observed that remedial action would be necessary to secure the stockpile in the event of heavy rainfall which will accelerate the general instability of the stockpile. Figures 1 and 2 are photographs of the stockpile of Sample 1, taken two weeks after forming the stockpile. They show clearly that the sewage cake is slumping and thus starting to break down.

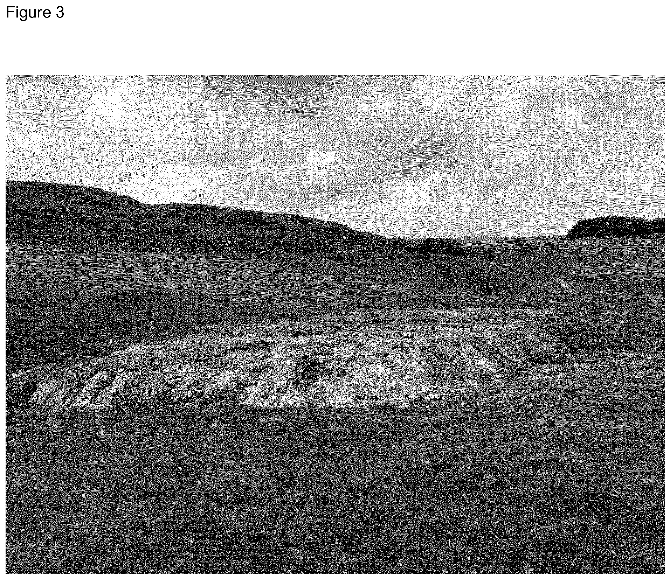

After 2 months, the stockpile of Sample 2 was observed to show no change from the previous week's inspection, i.e. it showed no odour, movement and/or instability. Figure 3 is a photograph of the stockpile of Sample, taken two weeks after forming the stockpile. This confirms that the addition of cement to the sewage cake greatly improves its general stability, its crust and results in no slumping. The stockpile of Sample 2 shows no signs of instability and has low odour. In contrast, the stockpile of Sample 1 shows instability of the stockpile sides, general slumping, noticeable odour, signs of the cake starting to break down and infestation of flies.

Various aspects and embodiments of the invention are defined by the following numbered clauses:
1. A process for treating sewage sludge comprising mixing: (i) CaO or Ca(OH)₂; and (ii) cement with sewage sludge.
2. A process according to clause 1, wherein the sewage sludge comprises from 10 to 30 wt % or 15 to 30 wt % dry solids.
3. A process according to any one of the preceding clauses, wherein CaO or Ca(OH)₂ is mixed with the sewage sludge in an amount so as to render the sewage sludge absent of *Salmonella* and to cause a 6 log₁₀ reduction of E. *coli* in the sewage sludge.
4. A process according to any one of the preceding clauses, wherein CaO or Ca(OH)₂ is mixed with the sewage sludge in an amount so as to render the sewage sludge absent of *Salmonella* and to reduce the amount of *E.coli* in the sewage sludge to less than 100 000 or less than 1000 c.f.u. per gram of dry weight.
5. A process according to any one of the preceding clauses, wherein the cement is mixed with the sewage sludge or treated sewage sludge in an amount of from 7 to 15 wt % based on the dry weight of the sewage sludge.
6. A process according to any one of the preceding clauses, wherein the cement comprises more than 25 wt % of a calcium silicate or a mixture of calcium silicates.
7. A process according to any one of the preceding clauses, wherein the cement comprises tricalcium silicate; dicalcium silicate; optionally, tricalcium aluminate ((CaO)₃.Al₂O₃); and, optionally, tetracalcium aluminoferrite ((CaO)₄.Al₂O₃.Fe₂O₃);.
8. A process according to any one of the preceding clauses, wherein the process comprises mixing (i) CaO or Ca(OH)₂ and (ii) cement with sewage sludge simultaneously.
9. A process according to clause 8, wherein the process comprises mixing (i) CaO and (ii) cement with sewage sludge simultaneously.
10. A process according to any one of clauses 1 to 8, wherein Ca(OH)₂ is mixed with the sewage sludge.
11. A process according to any one of the preceding clauses, wherein the process produces a treated sewage sludge and the treated sewage sludge is arranged in a stockpile.
12. Treated sewage sludge obtainable by the process of any one of clauses 1 to 10.
13. A stockpile comprising sewage sludge obtainable by the process of clause 11.
14. Use of treated sewage sludge according to clause 12 as a fertilizer or soil improver.
15. A method of fertilising land comprising spreading treated sewage sludge according to clause 12 on the land.
16. Use of cement to stabilise and/or reduce odours from sewage sludge that has been treated with CaO and/or Ca(OH)₂.
17. Use according to clause 16, wherein the cement comprises more than 25 wt % of a calcium silicate or a mixture of calcium silicates.

## Claims

1. A process for treating sewage sludge comprising mixing: (i) CaO or Ca(OH)₂; and (ii) cement with sewage sludge.

2. A process according to claim 1, wherein the sewage sludge comprises from 10 to 30 wt % or 15 to 30 wt % dry solids.

3. A process according to any one of the preceding claims, wherein CaO or Ca(OH)₂ is mixed with the sewage sludge in an amount so as to render the sewage sludge absent of *Salmonella* and to cause a 6 log₁₀ reduction of E. *coli* in the sewage sludge; and/or wherein CaO or Ca(OH)₂ is mixed with the sewage sludge in an amount so as to render the sewage sludge absent of *Salmonella* and to reduce the amount of *E.coli* in the sewage sludge to less than 100 000 or less than 1000 c.f.u. per gram of dry weight.

4. A process according to any one of the preceding claims, wherein the cement is mixed with the sewage sludge or treated sewage sludge in an amount of from 7 to 15 wt % based on the dry weight of the sewage sludge.

5. A process according to any one of the preceding claims, wherein the cement comprises more than 25 wt % of a calcium silicate or a mixture of calcium silicates.

6. A process according to any one of the preceding claims, wherein the cement comprises tricalcium silicate; dicalcium silicate; optionally, tricalcium aluminate ((CaO)₃.Al₂O₃); and, optionally, tetracalcium aluminoferrite ((CaO)₄.Al₂O₃. Fe₂O₃).

7. A process according to any one of the preceding claims, wherein the process comprises mixing (i) CaO or Ca(OH)₂ and (ii) cement with sewage sludge simultaneously.

8. A process according to any one of the preceding claims, wherein the process produces a treated sewage sludge and the treated sewage sludge is arranged in a stockpile.

9. Treated sewage sludge obtainable by the process of any one of claims 1 to 8.

10. A stockpile comprising sewage sludge obtainable by the process of claim 9.

11. Use of treated sewage sludge according to claim 10 as a fertilizer or soil improver.

12. Use of treated sewage sludge according to claim 11, wherein the treated sewage sludge is obtainable by a process comprising mixing: (i) CaO or Ca(OH)₂; and (ii) cement with sewage sludge, and wherein the cement is mixed in an amount of from 7 to 15 wt% based on the dry weight of the sewage sludge.

13. A method of fertilising land comprising spreading treated sewage sludge according to claim 9 on the land.

14. A method of fertilizing land according to claim 13, wherein the treated sewage sludge is obtainable by a process comprising mixing: (i) CaO or Ca(OH)₂; and (ii) cement with sewage sludge, and wherein the cement is mixed in an amount of from 7 to 15 wt% based on the dry weight of the sewage sludge.

15. Use of cement to stabilise and/or reduce odours from sewage sludge that has been treated with CaO and/or Ca(OH)₂, and, preferably, wherein the cement comprises more than 25 wt % of a calcium silicate or a mixture of calcium silicates.
